# EUROPÄISCHE PATENTSCHRIFT

(11) **EP 1 171 728 B1**
(45) Veröffentlichungstag und Bekanntmachung des Hinweises auf die Patenterteilung: **07.07.2010**
(21) Anmeldenummer: 01909424.2
(22) Anmeldetag: 05.01.2001
(51) Int. Cl.: F16H 55/22, F16H 57/02, F16H 1/16

(54) **GETRIEBE-ANTRIEBSEINHEIT, INSBESONDERE FÜR KRAFTFAHRZEUG-VERSTELLVORRICHTUNGEN**
DRIVE UNIT FOR A GEARBOX, ESPECIALLY FOR ADJUSTING DEVICES OF MOTOR VEHICLES
UNITE ENGRENAGE-ENTRAINEMENT, EN PARTICULIER POUR DISPOSITIFS D'ENTRAINEMENT DE REGLAGE MONTES DANS UN VEHICULE AUTOMOBILE

(30) Priorität: 19.02.2000 DE 10007697; 19.09.2000 DE 10046236
(43) Veröffentlichungstag der Anmeldung: 16.01.2002
(73) Patentinhaber: ROBERT BOSCH GMBH, 70442 Stuttgart (DE)
(72) Erfinder: HAUSSECKER, Walter, 77830 Buehlertal (DE); FREUND, Stefan, 76571 Gaggenau (DE); SCHINDLER, Kurt, 77855 Achern-Oensbach (DE); BELLER, Sascha, 77830 Buehlertal (DE); BUSCHLE, Hartmut, 70736 Fellbach (DE); HUCK, Thomas, 77836 Rheinmuenster (DE); KAESHAMMER, Daniel, 77815 Buehl (DE)
(86) Internationale Anmeldenummer: PCT/DE2001/000014
(87) Internationale Veröffentlichungsnummer: WO 2001/061215

(56) Entgegenhaltungen:
- EP-A- 0 710 760
- EP-A- 0 869 295
- FR-A- 2 373 724
- NL-A- 267 844
- US-A- 4 026 163
- US-A- 5 307 704
- PATENT ABSTRACTS OF JAPAN vol. 1997, no. 10, 31. Oktober 1997 (1997-10-31) & JP 09 166224 A (FUJITSU LTD), 24. Juni 1997 (1997-06-24)
- PATENT ABSTRACTS OF JAPAN vol. 1999, no. 12, 29. Oktober 1999 (1999-10-29) & JP 11 190402 A (OLYMPUS OPTICAL CO LTD), 13. Juli 1999 (1999-07-13) & JP 11 190402 A (OLYMPUS OPTICAL) 13. Juli 1999 (1999-07-13)

## Beschreibung

### Stand der Technik

Die Erfindung betrifft eine Getriebe- Antriebseinheit insbesondere für Kraftfahrzeug- Verstellvorrichtungen nach der Gattung der unabhängigen Ansprüche.

Mit dem deutschen Gebrauchsmuster G 91 04 125.2 ist eine Vorrichtung bekannt geworden die beispielsweise zum Verschieben von Fensterscheiben oder Schiebedächern eingesetzt wird. Bei dieser Getriebe- Antriebseinheit wird das Drehmoment des Elektromotors auf die Schnecke der Ankerwelle übertragen. Die Schnecke treibt über eine Verzahnung ein Abtriebsrad an, das die Verstellung der Fensterscheibe bzw. Schiebedachs bewirkt. Das mehrteilige Abtriebsrad weist dabei eine elastische Dämpfungsscheibe auf, um das Drehmoment des Elektromotors abzudämpfen, wenn das Fenster oder Schiebedach gegen einen Anschlag fährt. Dabei wirken zwischen der Schnecke und dem Abtriebsrad starke radiale Kräfte. Dies führt dazu, dass sich das Abtriebsrad verformt oder sich Abtriebsrad und Schnecke gegenseitig so stark ausweichen, dass keine ausreichende Verzahnung mehr gewährleistet ist. Dadurch kann die Verzahnung beschädigt werden, aber auch die Position des Stellteils ist dadurch nicht mehr eindeutig definiert.

Aus der EP 0869295 A2 ist eine Getriebe-Antriebseinheit mit den Merkmalen des Oberbegriffs des Anspruchs 1 bekannt.

### Vorteile der Erfindung

Die erfindungsgemäße Vorrichtung mit den Merkmalen des Anspruchs 1 hat den Vorteil, dass sich das Antriebsrad und/oder das Abtriebsrad nicht mehr wesentlich verformen können. Durch das Zusammenwirken der formstabilisierenden Ausformung mit der Gegenausformung des starren Zwischenteils, ist ein sauberes störungsfreies Ineinandergreifen der Verzahnung gewährleistet. Dadurch wird eine Beschädigung der Verzahnung oder gar ein Überspringen derselbigen sicher vermieden. Somit bleibt auch eine eindeutige Zuordnung der Umdrehung der Ankerwelle zur Position des Stellteils gewährleistet.

Von besonderer Bedeutung ist dieser Vorteil der Formstabilisierung bei einteiligen Antriebs rädern, die in sich einen gewissen Momentenübertrag dämpfen können. Hierbei ist ein starrer äußerer Teil des Rades über relativ dünne Stege mit dem inneren ebenfalls starren Teil des Rades verbunden, um ein zumindest teilweises Verdrehen dieser beiden Teile gegeneinander zu ermöglichen. Durch diesen mittleren elastischen Bereich (Stege), sind solche, recht günstig herstellbare Räder besonders anfällig für Verformung. Durch das Ineinandergreifen der formstabilisierenden Ausformung mit der in radialer Richtung starren Gegenausformung kann aber auch bei diesem Rädertyp eine Verformung sicher vermieden werden.

Durch die in den Unteransprüchen aufgeführten Merkmale sind vorteilhafte Weiterbilungen der Vorrichtung nach Anspruch 1 möglich. Das in radialer Richtung starre Zwischenteil kann einerseits ein separates Einlegeteil sein, das z.B. aus hartem Metall gefertigt ist. Weit kostengünstiger ist es allerdings dieses Zwischenteil als Teil des Getriebegehäuses auszuformen. Vor allem wenn das Gehäuse mittels eines Spritzgußverfahren gefertigt wird, erübrigt sich die Fertigung und die Montage eines zusätzlichen Teils. Damit ist die Gegenausformung praktisch direkt an der Gehäusewand ausgebildet.

Besonders vorteilhaft ist die Ausbildung der formstabilisierenden Ausformung des An- oder Abtriebsrades als umlaufender, geschlossener Abstützring. Dieser kann in Abhängigkeit der Materialeigenschaften verschieden dick oder hoch ausgebildet sein. Zusammen mit der umlaufenden Nut im Zwischenteil, bietet dieses kreisrunde, geschlossene System maximale Stabilität. Ein solch umlaufender Abstützring und die Nut können beispielsweise mit der Spritzgußtechnik sehr kostengünstig gefertigt werden und verursachen keinen zusätzlichen Arbeitsschritt.

Aus werkzeugtechnischen Gründen, insbesondere wenn das Antriebs- und/oder Abtriebsrad aus Kunststoff und das Zwischenteil beziehungsweise das Gehäuse aus Metall besteht, kann es von Vorteil sein, in dem An-/Abtriebsrad die Nut und im Zwischenteil den Abstützring auszubilden. Unabhängig davon können aber in vorteilhafter Weise bei der Wahl, ob ein Abstützring oder eine Nut auf dem An-/ Abtriebsrad ausgebildet wird, die Bauraumreserven oder die Verfügbarkeit der Herstellungswerkzeuge berücksichtigt werden. Ist der Abstützring am Zwischenteil oder Gehäuse angeordnet, kann er auch lediglich als Ringsegment oder Noppen ausgebildet sein, die im Bereich der angreifenden Kräfte wirken. Auf diese Weise kann die Erfindung auch unter beengten Platzverhältnissen angewandt werden.

Als besonders günstig für die Formstabilisierung des An-/Abtriebrades erweist es sich, wenn auf beiden Seiten des An-/Abtriebrades eine Ausformung mit entsprechender Gegenausformung ausgebildet ist. Dabei ist es möglich das Zwischenteil zweimal als separates Teil oder als Teil des Getriebegehäusebodens oder des Getriebegehäusedeckels auszubilden. Je nach Erfordernis kann die Ausformung mit Gegenausformung auch nur zum Gehäusedeckel oder zum Gehäuseboden hin ausgebildet sein. Diese Flexibilität ist äußerst vorteilhaft für den Herstellungsprozeß.

Die vorgeschlagene Formstabilisierung ist für verschiedene Typen von An-/Abtriebsrädern geeignet. So können beispielsweise bei gleichbleibendem Zwischenteil verschiedene An-/Abtriebsräder verwendet werden. Dadurch kann auch für ein herkömmliches Schneckenrad mit Dämpferplatte und Mitnehmer eine Verformung noch sicherer verhindert werden.

Wird das An-/Abtriebsrad aus Kunststoff gefertigt, läßt sich eine formstabilisierende Ausformung prozeßtechnisch besonders einfach und kostengünstig herstellen.

Vorteilhaft ist die Ausbildung der formstabilisierenden Ausformung und der Gegenausformung im radial äußeren Bereich des An-/Abtriebrades, da dadurch die Abstützung sehr nahe an der Verzahnung realisiert wird. Dadurch werden die radial wirkende Kräfte gleich im äußeren Bereich des An-/Abtriebrades aufgenommen, so dass diese die Kreisfläche des Rades nicht deformieren können.

Die Abmessungen der formstabilisierenden Ausformung und der Gegenausformung können derart gewählt werden, dass sich die beiden ineinander greifenden Ausformungen bei ungestörtem Verstellbetrieb nicht berühren. Dadurch werden Reibungsverluste vermieden. Das Spiel zwischen Ausformung und Gegenausformung darf aber auch nicht zu groß sein, da sonst eine gewisse Verformung doch wieder ermöglicht wird. In idealer Weise berührt die formstabilisierende Ausformung dann die Wandung der Gegenausformung, sobald durch zusätzliche radiale Kräfte eine Verformung auftritt. In diesem Fall bewirkt die Reibung zwischen Ausformung und Gegenausformung eine zusätzliche Dämpfung, was durchaus gewünscht ist, wenn das Stellglied gegen einen Anschlag fährt.

Als weitere Möglichkeit kann das Zwischenteil mit dem An-/Abtriebsrad mitrotieren. Hierbei ist das Zwischenteil nicht fest mit dem Getriebegehäuse verbunden, sondern kann sich frei mit dem An-/Abtriebsrad mitdrehen. Das Zwischenteil kann beispielsweise als starrer Metallring ausgeformt sein, der in die Nut des An-/Abtriebsrads eingreift. Der Vorteil dieser ebenfalls einfach herzustellenden Ausführung ist die völlige Unabhängigkeit vom Getriebegehäuse.

Besonders günstig ist die Ausbildung des Antriebsrades als eine Schnecke. Da diese direkt auf der in der Regel fest gelagerten Ankerwelle aufgebracht ist, kann nur das Abtriebsrad ausweichen. Bei Schnecken- und Schneckenradverzahnungen treten außerdem aufgrund der Verzahnungsgeometrie verstärkt radiale Kräfte auf, die das als Schneckenrad ausgebildete Abtriebsrad zu verformen versuchen. Bei dieser Ausführung wird folglich bevorzugt das Abtriebsrad mittels formstabilisierender Ausformung und entsprechender Gegenausformung abgestützt. Dies stellt eine kompakte Lösung beispielsweise für Fensterheber oder Schiebedachmotoren dar.

Die erfindungsgemäße Vorrichtung mit den Merkmalen des unabhängigen Anspruchs 12 hat den Vorteil, dass Bauteile und darüber Herstellungs- und Montagekosten eingespart werden. Durch die einteilige Ausbildung des An-/Abtriebsrades mit zwei gegeneinander verdrehbaren Bereichen, benötigt man keine Dämpferplatte und kein Mitnehmer mehr. Bei dieser elastischen, in sich dämpfenden Bauweise des An-/Abtriebrades ist es um so notwendiger, eine Verformung desselben mittels formstabilisierender Ausformung und Gegenausformung wirksam zu verhindern.

### Zeichnung

In der Zeichnung sind drei Ausführungsbeispiele einer erfindungsgemäßen Vorrichtung dargestellt und in den nachfolgenden Beschreibung näher erläutert.

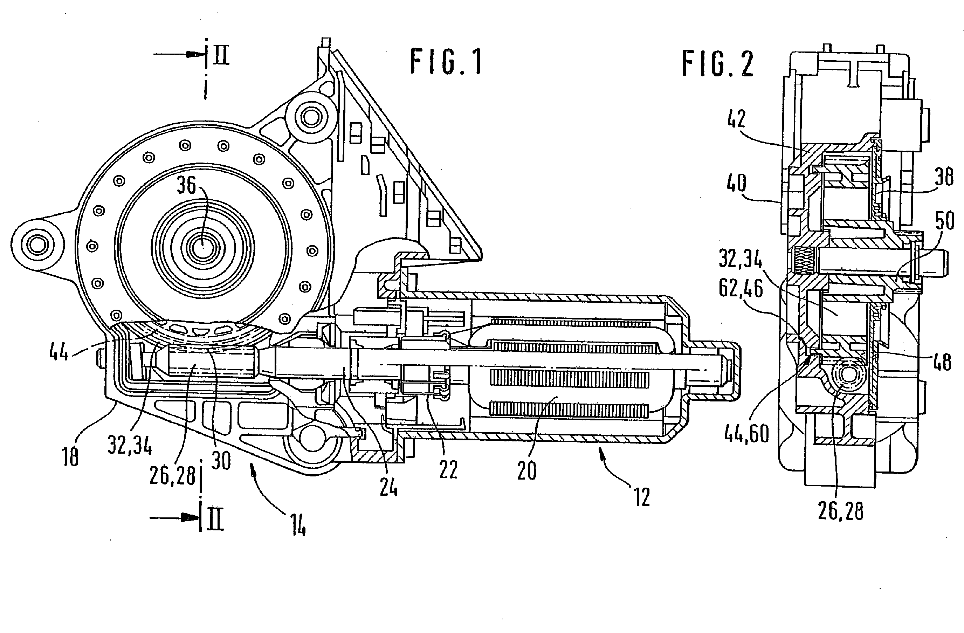

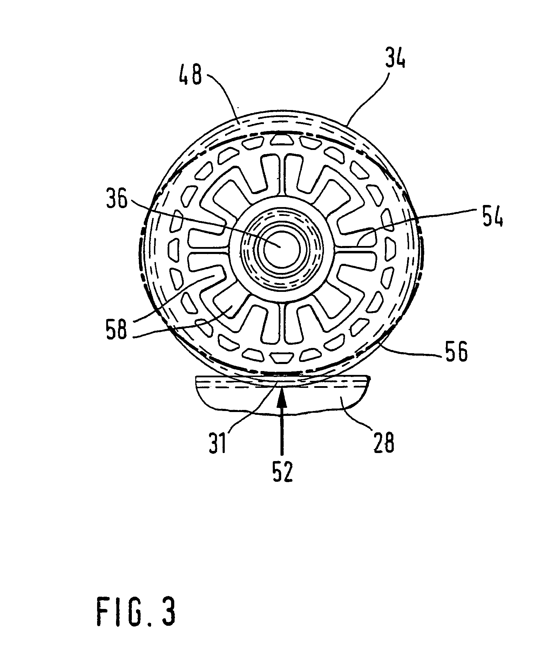

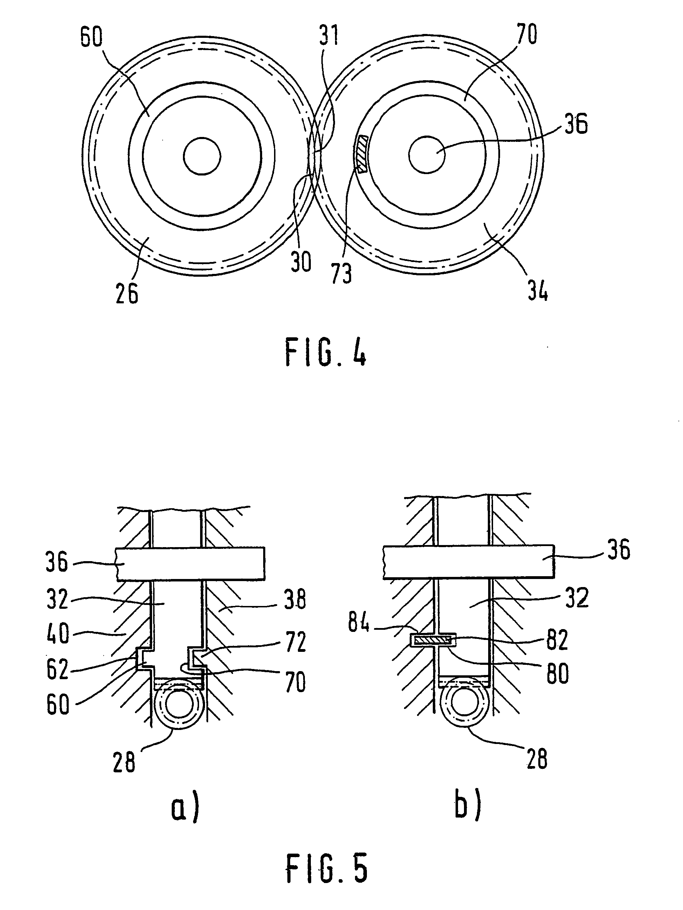

Es zeigen Figur 1 ein Ausführungsbeispiel einer Getriebeantriebseinheit im Schnitt, Figur 2 ein Schnitt entlang der Linie II - II in Figur 1, die Figur 3 eine schematische Darstellung einer weiteren nicht beanspruchten Ausführungsform, Figur 4 die Darstellung eines dritten Ausführungsbeispiels und Figur 5a,b zwei weitere Variationen des ersten Ausführungsbeispiels in der Ansicht gemäß Figur 2.

### Beschreibung

Das in der Figur 1 dargestellte Ausführungsbeispiel zeigt eine erfindungsgemäße Getriebe-Antriebseinheit mit einem Motor 12, einem Getriebe 14 sowie einem Gehäuse 18. Der Motor 12 ist elektrisch kommutiert und weist einen Anker 20, einen Kommutator 22 und eine mehrfach gelagerte Ankerwelle 24 auf, die sich bis in den Bereich des Getriebes 14 erstreckt. Auf der Ankerwelle 24 ist als Antriebsrad 26 eine Schnecke 28 ausgebildet, die über eine Verzahnung 30 mit einem Abtriebsrad 32 kommuniziert. Das Abtriebsrad 32 ist als Schneckenrad 34 ausgebildet, das auf einem im Getriebegehäuse 18 fest eingespritzten Achse 36 gelagert ist. In Figur 1 ist das Abtriebsrad 32 größten Teils von einem Deckel 38 des Getriebegehäuses 18 bedeckt, bis auf eine konzentrische Aussparung um die Achse 36 herum zur Ankopplung eines Abtriebsrizels.

Schematisch wird dies in Figur 3 anhand eines einteiligen Abtriebsrades 32 dargestellt, das in einem späteren Ausführungsbeispiel näher beschrieben wird. Die Schnecke 28 kämmt im normalen Verstellbetrieb mit dem Schneckenrad 34 mit ausreichendem Zahneingriff 31. Wenn das Stellglied nun gegen einen Anschlag fährt, wird die Bewegung des Schneckenrads 34 abrupt gestoppt. Durch die weiterrotierende Schnecke 28 steigt die radiale Kraftkomponente 52 stark an. Diese verformt das Schneckenrad 34 zu einem Oval 56. Dabei wird das Schneckenrad 34 so stark deformiert, dass kein genügender Zahneingriff 31 zwischen Schnecke 28 und Schneckenrad 34 mehr gewährleistet ist. Daraus folgt eine Beschädigung des Abtriebrades 32 oder auch ein Überspringen der Verzahnung 30. Dies soll durch die Führung des Abtriebsrades 32 mittels einer formstabilisierenden Ausformung 44 verhindert werden.

Figur 2 zeigt dasselbe Ausführungsbeispiel wie Figur 1 in einem Querschnitt durch das Abtriebsrad 32 und die Achse 36. Im Bild ist links der Boden 40 und auf der rechten Seite der Deckel 38 des Getriebegehäuses 18 dargestellt. Das Abtriebsrad 32 weist eine formstabilisierende Ausformung 44 auf, die als umlaufender geschlossener Abstützring 60 (Figur 4) ausgebildet ist. Der umlaufende Abstützring 60 wird von einer Gegenausformung 46 geführt, die als eine umlaufende geschlossene Nut 62 in einem Zwischenteil 42 ausgebildet ist, wie auch in Figur 5a dargestellt ist. In unserem Ausführungsbeispiel ist das Zwischenteil 42 in den Boden 40 des Getriebegehäuses 18 integriert. Die formstabilisierende Ausformung 44 und die Gegenausformung 46 greifen derart ineinander, dass das freie Spiel in radialer Richtung minimal ist, jedoch eine Berührung im normalen Verstellbetrieb verhindert wird. Dadurch ist gewährleistet, dass beim Auftreten von radialen Kräften 52 (siehe Figur 3) vom Antriebsrad 26 auf das Abtriebsrad 32 eine Verformung derselben verhindert wird, da sich dann sofort die Ausformung 44 radial an der Gegenausformung 46 abstützt. In axialer Richtung (Achse 36) ist die Wahl des freien Spiels nicht besonders kritisch.

Fährt nun das von einem Abtriebsrad 32 angetriebene Stellteil gegen einen Anschlag, kann sich das Abtriebsrad 32 zwar in sich verdrehen um den Momentenübertrag zu dämpfen, die kreisrunde Form des Abtriebsrades 32 bleibt aber durch die Wechselwirkung der formstabilisierenden Ausformung 44 mit der Gegenausformung 46 erhalten. Dadurch ist auch sichergestellt, dass sich der Abstand zwischen Abtriebsrad 32 und Antriebsrad 26 nicht verändert, so dass ein ausreichender Zahneingriff 31 gewährleistet bleibt. Dabei ist wichtig, dass das Abtriebsrad 32 spielfrei auf der Achse 36 gelagert ist und die Lagerung der Ankerwelle 24 ein Ausweichen der Schnecke wirkungsvoll verhindert.

In einer Variation des Ausführungsbeispiels ist in Figur 5a die formstabilisierende Ausformung 44 des Abtriebrades 32 als umlaufende, geschlossene Nut 70 ausgebildet, entsprechend die Gegenausformung 46 des im Getriebegehäuse 18 integrierten Zwischenteils 42 als umlaufender, geschlossener Ring 72. Die beiden Möglichkeiten können unabhängig voneinander auf jeweils einer Seite des Abtriebrades 32 zum Gehäuseboden 40 oder zum Gehäusedeckel 38 hin eingesetzt werden.

In einer weiteren Variante des Ausführungsbeispiels, dargestellt in Figur 4, ist der umlaufende Abstützring 72 des Zwischenteils 42 als Ringsegment 73 ausgebildet, das im Bereich der Verzahnung 30 angeordnet ist. Das Ringsegment 73 steht im Eingriff mit der umlaufenden geschlossenen Nut 70 des Abtriebrades 34, wodurch ebenfalls eine Verformung desselben verhindert wird.

Aus Figur 2 ist ersichtlich, dass die formstabilisierende Ausformung 44 im äußeren Bereich 48 des Abtriebsrades 32 angeordnet ist. Damit liegt dieser Abstützring 60 mit der entsprechenden Nut 62 des Getriebegehäuses 18 sehr nahe am Radius der Verzahnung 30. Es ist auch möglich beispielsweise aus Platzgründen für die ringförmige Ausformung 44 einen kleineren Radius zu wählen, die formstabilisierende Wirkung nimmt aber mit dem Radius zu. Dasselbe gilt sinngemäß auch für den Radius der formstabilisierenden Ausformung 44 des Antriebrades 26 (Figur 4).

Im Ausführungsbeispiel mit einer Schnecke 28 als Antriebsrad 26 (Figur 1) ist bei diesem jedoch keine solche formstabilisierende Ausformung 44 notwendig. Ebenso ist hier das Abtriebsrad 32 und das Getriebegehäuse 18 aus Kunststoff gefertigt. Dabei ist das Zwischenteil 42 als Teil des Getriebegehäusebodens 40 ausgebildet. Dies ist herstellungstechnisch mittels Spritzgußverfahren besonders günstig zu realisieren.

In einem weiteren Ausführungsbeispiel in Figur 5b ist das Zwischenteil 42 als separates Bauteil frei drehbar. Das Zwischenteil 42 ist dabei beispielsweise ein starrer Ring 82 aus Metall, der sowohl in eine Nut 80, als formstabilisierende Ausformung 44 im Abtriebsrad 32, als auch in eine Nut 84 im Gehäuse 18 eingreift. Dabei ist es unerheblich, ob das Zwischenteil 42 die Wandungen der Nut 80 im Abtriebsrad 32 berührt und dadurch mit demselben mitrotiert, oder ob das Zwischenteil 42 auf Grund des freien Spiels in der Nut 80 des Abtriebsrades 32 relativ zu demselben stehen bleibt.

Der erfindungsgemäße Gedanke ist auch auf das herkömmliche Abtriebsrad 32 eines Fensterhebenmotors anwendbar. Das Abtriebsrad 32 besteht dabei aus mehreren Teilen, dem Schneckenrad 34 mit durchgehendem, kreisrunden Boden, einer oder mehrere eingelegte Dämpferplatten und dem eingepaßten Mitnehmer, der das Drehmoment auf ein Abtriebsritzel überträgt. Fährt das Stellteil gegen einen Anschlag, werden die an der Verzahnung 30 auftretenden Radialkräfte 52 über den starren Boden des Schneckenrades 26 auf die in das Gehäuse 18 eingepreßte Achse 36 übertragen. Für den Fall, dass die Formstabilität für diese Vorrichtung nicht ausreicht, wird auch bei diesem Abtriebsrad 32 eine formstabilisierende Ausformung 44 ausgeformt, die in eine Gegenausformung 46 des Zwischenteils 42 eingreift.

Weit notwendiger ist eine solche Formstabilisierung bei einteiligen Abtriebsrädern 32 entsprechend Figur 3 einer weiteren nicht beanspruchten Ausführungsform da hier die unterstützende Wirkung der durchgehenden Bodenplatte des Schneckenrads 34 fehlt. Der äußere, starre Bereich 48 des Schneckenrads 34 ist nur durch schmale Stege 54 mit dem inneren Bereich 50 der Nabe verbunden. Treten nun erhöhte radiale Kraftkomponenten 52 auf, verformen diese das Schneckenrad 34 zu einem Oval 56, da die dünnen Stege 54 der Radialkraft 52 nicht standhalten. Dies ist auch dann der Fall, wenn das Abtriebsrad 32 zur Begrenzung dessen Verdrehbarkeit weitere zusätzliche Ausbildungen 58 aufweist. Deshalb ist die Notwendigkeit bei diesen einteiligen, in sich verdrehbaren Abtriebsrädern 32 besonders groß deren Verformung mittels ineinandergreifender, formstabilisierender Ausformung 44 und Gegenausformung 46 zu verhindern.

## Patentansprüche

1. Getriebe-Antriebseinheit, insbesondere für Kraftfahrzeug-Verstellvorrichtungen, mit einem Gehäuse (18) und einem Antriebsrad (26), das über eine Verzahnung (30) in ein Abtriebsrad (32) greift, wobei das Antriebsrad (26) und/oder das Abtriebsrad (32) mindestens eine formstabilisierende Ausformung (44) aufweist, die mit einer in einem in radialer Richtung starren Zwischenteil (42) angeordneten Gegenausformung (46) zusammenwirkt, **dadurch gekennzeichnet, dass** das Abtriebsrad (32) aus mehreren Teilen besteht, einem Schneckenrad (26) mit durchgehendem, kreisrunden Boden, einer oder mehrere eingelegter Dämpferplatten und einem eingepaßten Mitnehmer, der das Drehmoment auf ein Abtriebsritzel überträgt, und die Maße der ineinandergreifenden formstabilisierenden Ausformung (44) und der Gegenausformung (46) derart gewählt sind, dass sich die beiden ineinandergreifenden Ausformungen (44,46) bei ungestörtem Verstellbetrieb nicht berühren und die formstabilisierende Ausformung (44) dann die Wandung der Gegenausformung (46) berührt, sobald durch eine zusätzliche radiale Kräfte eine Verformung auftritt, wodurch die Reibung zwischen der Ausformung (44) und der Gegenausformung (46) eine zusätzliche Dämpfung bewirkt, wenn ein Stellglied gegen einen Anschlag fährt.

2. Getriebe-Antriebseinheit nach Anspruch 1, **dadurch gekennzeichnet, dass** das Zwischenteil (42) ein Teil des Gehäuses (18) ist.

3. Getriebe-Antriebseinheit nach einem der Ansprüche 1 oder 2,
**dadurch gekennzeichnet, dass** die formstabilisierende Ausformung (44) als umlaufender, geschlossener Abstützring (60) ausgebildet ist, der in einer umlaufenden, geschlossener Nut (62) im Zwischenteil (42) läuft.

4. Getriebe-Antriebseinheit nach einem der Ansprüche 1 oder 2,
**dadurch gekennzeichnet, dass** die formstabilisierende Ausformung (44) als umlaufende geschlossene Nut (70) ausgebildet ist, die einen umlaufenden, geschlossenen Ring (72) oder ein Ringsegment (73) des Zwischenteiles (42) aufnimmt.

5. Getriebe-Antriebseinheit nach einem der Ansprüche 3 oder 4,
**dadurch gekennzeichnet, dass** das Gehäuse (18) einen Boden (40) und einen Deckel (38) aufweist, und das Zwischenteil (42) mit der Gegenausformung (46) am Boden (40) oder/und am Deckel (38) des Gehäuses (18) angeordnet ist.

6. Getriebe-Antriebseinheit nach einem der Ansprüche 1 bis 5, **gekennzeichnet durch** eine Ausbildung als Fensterhebermotor oder Schiebedachmotor.

7. Getriebe-Antriebseinheit nach einem der Ansprüche 1 bis 6,
**dadurch gekennzeichnet, dass** das Antriebsrad (26) und/oder das Abtriebsrad (32) aus Kunststoff gefertigt ist.

8. Getriebe-Antriebseinheit nach einem der Ansprüche 1 bis 7,
**dadurch gekennzeichnet, dass** die formstabilisierende Ausformung (44) und die Gegenausformung (46) im radial äußeren Bereich (48) des Antriebsrades (26) und/oder des Abtriebrades (32) angeordnet sind.

9. Getriebe-Antriebseinheit nach einem der Ansprüche 1 bis 8, **dadurch gekennzeichnet, dass** das Zwischenteil (42) als Teil des Gehäusebodens (40) mittels Spritzgußverfahren gefertigt ist.

10. Getriebe-Antriebseinheit nach einem der Ansprüche 1 bis 9,
**dadurch gekennzeichnet, dass** das Zwischenteil (42) mit dem Antriebsrad (26) und/oder dem Abtriebrad (32) mitrotiert.

11. Getriebe-Antriebseinheit nach einem der Ansprüche 1 bis 10,
**dadurch gekennzeichnet, dass** das Antriebsrad (26) als eine Schnecke (28) ausgebildet ist.

12. Getriebe-Antriebseinheit nach Anspruch 1 mit einem Antriebsrad (26), das über eine Verzahnung (30) in ein Abtriebsrad (32) greift,
**dadurch gekennzeichnet, dass** das Antriebsrad (26) einteilig ist und aus einem inneren und einem aüßeren Bereich besteht, die gegeneinander verdrehbar sind.

13. Getriebe-Antriebseinheit nach Anspruch 12, **dadurch gekennzeichnet, dass** das Antriebsrad (26) und/oder das Abtriebsrad (32) eine formstabilisierende Ausformung (44) gemäß einem der Ansprüche 1 bis 11 aufweist.

## Claims

1. Geared drive unit, in particular for motor vehicle adjustment devices, with a housing (18) and with a driving wheel (26) which engages into a driven wheel (32) via a toothing (30), the driving wheel (26) and/or the driven wheel (32) having at least one dimensionally stabilizing shaped portion (44) which co-operates with a matching shaped portion (46) arranged in a radially rigid intermediate part (42), **characterized in that** the driven wheel (32) consists of a plurality of parts, of a worm wheel (26) with a continuous circular bottom, of one or more inserted damper plates and of a fitted-in driver which transmits the torque to a driven pinion, and the extent of the dimensionally stabilizing shaped portion (44) and matching shaped portion (46) which engage one in the other being selected in such a way that, in the event of undisturbed adjusting operation, the two shaped portions (44, 46) engage one in the other do not touch one another, and the dimensionally stabilizing shaped portion (44) touches the wall of the matching shaped portion (46) as soon as a deformation occurs due to an additional radial force, with the result that the friction between the shaped portion (44) and the matching shaped portion (46) causes additional damping when an actuating member moves against a stop.

2. Geared drive unit according to Claim 1, **characterized in that** the intermediate part (42) is part of the housing (18).

3. Geared drive unit according to either one of Claims 1 and 2, **characterized in that** the dimensionally stabilizing shaped portion (44) is designed as a peripheral closed supporting ring (60) which runs in a peripheral closed groove (62) in the intermediate part (42).

4. Geared drive unit according to either one of Claims 1 and 2, **characterized in that** the dimensionally stabilizing shaped portion (44) is designed as a peripheral closed groove (70) which receives a peripheral closed ring (72) or a ring segment (73) of the intermediate part (42).

5. Geared drive unit according to either one of Claims 3 and 4, **characterized in that** the housing (18) has a bottom (40) and a cover (38), and the intermediate part (42) having the matching shaped portion (46) is arranged on the bottom (40) and/or on the cover (38) of the housing (18).

6. Geared drive unit according to one of Claims 1 to 5, **characterized by** a design as a window-lifter motor or sliding-roof motor.

7. Geared drive unit according to one of Claims 1 to 6, **characterized in that** the driving wheel (26) and/or the driven wheel (32) are/is manufactured from plastic.

8. Geared drive unit according to one of Claims 1 to 7, **characterized in that** the dimensionally stabilizing shaped portion (44) and the matching shaped portion (46) are arranged in the radially outer region (48) of the driving wheel (26) and/or of the driven wheel (32).

9. Geared drive unit according to one of Claims 1 to 8, **characterized in that** the intermediate part (42) is manufactured as part of the housing bottom (40) by means of injection-moulding methods.

10. Geared drive unit according to one of Claims 1 to 9, **characterized in that** the intermediate part (42) co-rotates with the driving wheel (26) and/or with the driven wheel (32).

11. Geared drive unit according to one of Claims 1 to 10, **characterized in that** the driving wheel (26) is designed as a worm (28).

12. Geared drive unit according to Claim 1 with a driving wheel (26) which engages into a driven wheel (32) via a toothing (30), **characterized in that** the driving wheel (26) is one-part and consists of an inner and of an outer region which are rotatable with respect to one another.

13. Geared drive unit according to Claim 12, **characterized in that** the driving wheel (26) and/or the driven wheel (32) have/has a dimensionally stabilizing shaped portion (44) according to one of Claims 1 to 11.

## Revendications

1. Unité d'entraînement à engrenage, notamment pour dispositifs de réglage de véhicules automobiles, comprenant un boîtier (18) et une roue d'entraînement (26) qui vient en prise par le biais d'une denture (30) dans une roue de sortie (32), la roue d'entraînement (26) et/ou la roue de sortie (32) présentant au moins une formation (44) de stabilisation de forme, qui coopère avec une formation conjuguée (46) disposée dans une partie intermédiaire (42) rigide dans la direction radiale, **caractérisée en ce que** la roue de sortie (32) se compose de plusieurs parties, une roue à denture hélicoïdale (26) avec un fond rond circulaire continu, une ou plusieurs plaques d'amortissement insérées, et un dispositif d'entraînement adapté, qui transmet le couple à un pignon de sortie, et les dimensions de la formation (44) de stabilisation de forme et de la formation conjuguée (46) s'engageant l'une dans l'autre étant choisies de telle sorte que les deux formations s'engageant l'une dans l'autre (44, 46) ne soient pas en contact en cas de fonctionnement de réglage conforme, et que la formation (44) de stabilisation de forme vienne en contact avec la paroi de la formation conjuguée (46), dès qu'il se produit, sous l'effet d'une force radiale supplémentaire, une déformation de telle sorte que le frottement entre la formation (44) et la formation conjuguée (46) provoque un amortissement supplémentaire quand un organe de réglage bute contre une butée.

2. Unité d'entraînement à engrenage selon la revendication 1, **caractérisée en ce que** la partie intermédiaire (42) est une partie du boîtier (18).

3. Unité d'entraînement à engrenage selon l'une quelconque des revendications 1 ou 2, **caractérisée en ce que** la formation (44) de stabilisation de forme est réalisée sous forme de bague de support fermée périphérique (60), qui s'étend dans une rainure fermée périphérique (62) dans la partie intermédiaire (42).

4. Unité d'entraînement à engrenage selon l'une quelconque des revendications 1 ou 2, **caractérisée en ce que** la formation (44) de stabilisation de forme est réalisée sous forme de rainure fermée périphérique (70), qui reçoit une bague fermée périphérique (72) ou un segment annulaire (73) de la partie intermédiaire (42).

5. Unité d'entraînement à engrenage selon l'une quelconque des revendications 3 ou 4, **caractérisée en ce que** le boîtier (18) présente un fond (40) et un couvercle (38), et la partie intermédiaire (42) est disposée avec la formation conjuguée (46) sur le fond (40) et/ou sur le couvercle (38) du boîtier (18).

6. Unité d'entraînement à engrenage selon l'une quelconque des revendications 1 à 5, **caractérisée par** une réalisation sous forme de moteur de lève-glace ou de moteur de toit ouvrant.

7. Unité d'entraînement à engrenage selon l'une quelconque des revendications 1 à 6, **caractérisée en ce que** la roue d'entraînement (26) et/ou la roue de sortie (32) sont fabriquées en plastique.

8. Unité d'entraînement à engrenage selon l'une quelconque des revendications 1 à 7, **caractérisée en ce que** la formation (44) de stabilisation de forme et la formation conjuguée (46) sont disposées dans la région radialement extérieure (48) de la roue d'entraînement (26) et/ou de la roue de sortie (32).

9. Unité d'entraînement à engrenage selon l'une quelconque des revendications 1 à 8, **caractérisée en ce que** la partie intermédiaire (42) est réalisée en tant que partie du fond de boîtier (40) au moyen d'un procédé de moulage par injection.

10. Unité d'entraînement à engrenage selon l'une quelconque des revendications 1 à 9, **caractérisée en ce que** la partie intermédiaire (42) tourne conjointement avec la roue d'entraînement (26) et/ou la roue de sortie (32).

11. Unité d'entraînement à engrenage selon l'une quelconque des revendications 1 à 10, **caractérisée en ce que** la roue d'entraînement (26) est réalisée sous forme de vis sans fin (28).

12. Unité d'entraînement à engrenage selon la revendication 1, comprenant une roue d'entraînement (26) qui vient en prise par le biais d'une denture (30) dans une roue de sortie (32), **caractérisée en ce que** la roue d'entraînement (26) est réalisée d'une seule pièce et se compose d'une région intérieure et d'une région extérieure, qui peuvent tourner l'une par rapport à l'autre.

13. Unité d'entraînement à engrenage selon la revendication 12, **caractérisée en ce que** la roue d'entraînement (26) et/ou la roue de sortie (32) présente une formation (44) de stabilisation de forme selon l'une quelconque des revendications 1 à 11.
